# FASCICULE DE BREVET EUROPEEN

(11) **EP 4 630 323 B1**
(45) Date de publication et mention de la délivrance du brevet: **27.05.2026**
(21) Numéro de dépôt: 23820860.7
(22) Date de dépôt: 07.12.2023
(51) Int. Cl.: B64F 5/60, F01D 21/00, F01D 25/18, F01D 25/20, F02C 7/06, F16N 29/04, G01K 3/14, G01M 15/14

(54) **PROCÉDÉ ET SYSTÈME DE CONTRÔLE DE LA PERMÉABILITÉ D'UN CIRCUIT DE LUBRIFICATION D'UNE TURBOMACHINE D'AÉRONEF**
VERFAHREN UND SYSTEM ZUR STEUERUNG DER PERMEABILITÄT EINES SCHMIERKREISLAUFS EINER FLUGZEUGTURBOMASCHINE
METHOD AND SYSTEM FOR CONTROLLING THE PERMEABILITY OF A LUBRICATION CIRCUIT OF AN AIRCRAFT TURBOMACHINE

(30) Priorité: 10.12.2022 FR 2213132
(43) Date de publication de la demande: 15.10.2025
(73) Titulaire: Safran Helicopter Engines, 64510 Bordes (FR)
(72) Inventeur: BENARD, Mathieu, 77550 Moissy-Cramayel (FR); PIQUER, Fabrice, 77550 Moissy-Cramayel (FR); DEBAT, Alexandre Paul Raimond, 77550 Moissy-Cramayel (FR); LAUCAIGNE, Mathieu, 77550 Moissy-Cramayel (FR); BRANCHEREAU, Emmanuel, 77550 Moissy-Cramayel (FR); ROBERT, Olivier, 77550 Moissy-Cramayel (FR)
(74) Mandataire: Argyma
(86) Numéro de dépôt international: PCT/EP2023/084661
(87) Numéro de publication internationale: WO 2024/121289

(56) Documents cités:
- JP-A- S6 198 925
- US-A- 3 582 928

## Description

### Domaine technique

La présente invention concerne le domaine des systèmes de lubrification montés dans une turbomachine d'aéronef.

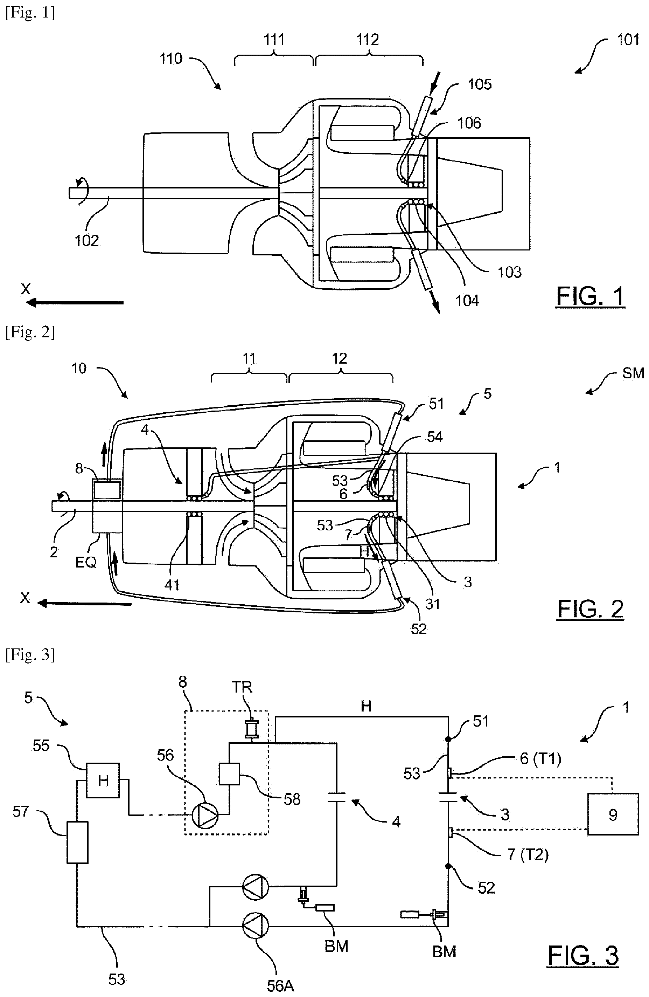

De manière connue, en référence à la [Fig.1], une turbomachine 101 d'aéronef comprend un générateur de gaz 110 comportant un étage de compression 111 et un étage de turbine 112 reliés à un arbre de propulsion 102 pour entraîner en rotation un organe propulsif (non représenté). La turbomachine 101 s'étend longitudinalement selon un axe X.

Comme représenté sur la [Fig.1], l'arbre de propulsion 102 s'étend suivant l'axe longitudinal X de la turbomachine 101 et est guidé en rotation à l'arrière du générateur de gaz 110 par un palier arrière 103 solidaire d'un carter de la turbomachine 101. De manière connue, le palier arrière 103 comprend une pluralité de roulements 104 montés entre deux bagues. L'arbre de propulsion 102 est inséré dans le palier arrière 103.

Lorsque la turbomachine 101 est en fonctionnement, l'arbre de propulsion 102 tourne sur lui-même, ce qui échauffe le palier arrière 103. Pour limiter cet échauffement, la turbomachine 101 comprend, de manière connue, un circuit de lubrification 105 qui permet, via des organes d'injection 106 (comme des gicleurs par exemple) d'injecter de l'huile sur le palier arrière 103 pour le lubrifier et drainer des calories.

Cependant, lors de l'arrêt de la turbomachine 101, la chaleur emmagasinée se dissipe des pièces les plus chaudes, ce qui entraine un échauffement des pièces les plus froides. En fonctionnement, le palier arrière 103 étant refroidi par l'huile, il s'agit d'une pièce froide. Autrement dit, la température du palier arrière 103 augmente fortement lors de l'arrêt de la turbomachine 101 et l'huile résiduelle présente dans le palier arrière103 s'échauffe. Un tel échauffement important peut entraîner un vieillissement prématuré de l'huile et sa dégradation.

De manière connue, la surchauffe d'une huile entraîne la formation de dépôts solides qui se déposent sur la paroi intérieure des conduits du circuit de lubrification. Une telle formation de particules solides est communément désignée « cokéfaction ». L'accumulation de dépôts peut obstruer les conduits du circuit de lubrification, et en particulier les organes d'injection, ce qui peut empêcher la circulation de l'huile. Une altération de la circulation de l'huile dans le circuit de lubrification peut entraîner une dégradation du refroidissement de la turbomachine. Une lubrification et un refroidissement dégradés peuvent user de manière prématurée le palier arrière, ce qui peut entraîner des dommages sur la turbomachine.

Aussi, il est nécessaire de vérifier régulièrement que le circuit de lubrification n'est pas obstrué. Pour cela, il est connu de surveiller le débit de l'huile circulant dans le circuit de lubrification, en particulier, au niveau des organes d'injection de l'huile.

A ce titre, on connaît dans l'art antérieur un procédé de vérification dans lequel de l'huile est versée manuellement dans le circuit de lubrification pendant une opération de maintenance. L'huile s'écoule par gravité dans le circuit de lubrification entre une entrée et une sortie d'huile, via les organes d'injection, selon une durée de test. Cette durée de test est comparée à une durée de référence, par exemple déterminée suite à la fabrication de la turbomachine, afin de déterminer si le débit est plus faible qu'initialement, c'est-à-dire, si sa perméabilité à baisser.

Cependant, la durée de l'écoulement dépend directement du volume exact d'huile qui traverse le circuit de lubrification, ainsi que de sa température. Une telle opération n'étant pas réalisée dans un environnement contrôlé (comme un laboratoire par exemple), les résultats sont imprécis et sources d'erreurs. Aussi, il est généralement nécessaire de répéter le procédé de vérification pour confirmer les mesures, ce qui est chronophage. De plus, la turbomachine étant montée sur l'aéronef, l'entrée du circuit de lubrification est difficile d'accès et nécessite qu'un opérateur soit positionné sur l'aéronef alors que le capot de la turbomachine est ouvert, ce qui est peu pratique. En outre, cela nécessite de conserver une base de données avec les durées de référence d'écoulement de chaque turbomachine, ce qui est complexe.

On connaît également dans l'art antérieur le document US3582928A qui décrit un système de surveillance de l'état de santé d'un palier de turbomachine d'aéronef. Ce système comprend un arbre moteur, un roulement à billes, des passages d'admission et d'évacuation d'huile, ainsi qu'une paire de thermocouples pour mesurer la température de l'huile dans lesdits passages. La différence de température entre l'amont et l'aval est comparée à une valeur de seuil dépendant de la vitesse de l'arbre, déclenchant une alerte si cette différence excède le seuil. Par ailleurs, le document JPS6198925A divulgue un dispositif de surveillance pour les paliers d'un générateur de puissance à turbine à gaz, d'un réducteur et d'un générateur, comportant des détecteurs de température d'admission et d'évacuation d'huile lubrifiante. L'écart de température mesuré est comparé à une valeur de seuil, fonction de la puissance de sortie de la turbine à gaz, puis affiché à l'utilisateur.

L'invention vise ainsi à éliminer au moins certains de ces inconvénients en proposant un système et un procédé pour le contrôle de la perméabilité d'un circuit de lubrification d'une turbomachine d'aéronef simples, précis et efficaces. Le système et le procédé visent en particulier à détecter de manière simple et rapide une obstruction du circuit de lubrification, par exemple dans le but d'effectuer une maintenance prédictive.

### PRESENTATION DE L'INVENTION

L'invention concerne un procédé de contrôle de la perméabilité d'un circuit de lubrification d'une turbomachine d'aéronef, la turbomachine comprenant au moins un palier de guidage dans lequel est monté rotatif un arbre de propulsion, le circuit de lubrification étant configuré pour faire circuler un flux d'huile d'amont en aval entre une entrée d'huile du circuit de lubrification et une sortie d'huile du circuit de lubrification pour lubrifier le palier de guidage, le procédé comprenant les étapes consistant à :
- Mesurer une première température de l'huile en amont du palier de guidage,
- Mesurer une deuxième température de l'huile en aval du palier de guidage,
- Calculer une différence de température entre la deuxième température et la première température,
- Comparer la différence de température avec une différence de température attendue prédéterminée, et
- Lorsque la différence de température est supérieure à la différence de température attendue, émettre un signal de défaut de perméabilité du circuit de lubrification.

Le procédé selon l'invention permet de manière simple et efficace de détecter un défaut de perméabilité du circuit de lubrification. De manière avantageuse, le procédé, simple à mettre en œuvre, permet un tel contrôle en mesurant uniquement la température en amont et en aval du palier de guidage. De plus, grâce à l'invention, il n'est pas nécessaire de connaitre l'état initial de la turbomachine neuve, comme cela était le cas dans l'art antérieur. Une mesure en température est très fiable puisque, selon un aspect de l'invention, la variation de température de l'huile est plus importante par exemple qu'une mesure en pression lorsque les conduits de circulation sont obstrués.

En outre, le procédé selon l'invention est précis et nécessite avantageusement une seule mesure, contrairement au procédé de l'art antérieur dans lequel il était nécessaire de répéter l'opération pour obtenir un résultat fiable. Le procédé de contrôle est ainsi plus rapide et peut de plus être réalisé à tout instant. Autrement dit, grâce à l'invention, le procédé de contrôle ne nécessite pas une opération de maintenance dédiée ce qui représente un gain de temps important et permet de limiter les coûts.

L'invention concerne également un procédé de contrôle de la perméabilité d'un circuit de lubrification d'une turbomachine d'aéronef, la turbomachine s'étendant selon un axe longitudinal orienté d'arrière vers l'avant et comprenant successivement selon l'axe longitudinal au moins un palier de guidage arrière, un palier de guidage avant, dans lesquels est monté rotatif un arbre de propulsion, et un boîtier de lubrification comprenant au moins une pompe mécanique de circulation d'un flux d'huile et un organe de transmission de la pression et de la température de l'huile, le circuit de lubrification étant configuré pour faire circuler le flux d'huile d'amont en aval entre une entrée d'huile du circuit de lubrification et une sortie d'huile du circuit de lubrification pour lubrifier chaque palier de guidage, le procédé comprenant les étapes consistant à :
- Mesurer une première température de l'huile en amont de l'un des paliers de guidage, la première température étant mesurée au moyen d'un premier organe de mesure de la température du flux d'huile, monté dans le boîtier de lubrification à l'avant du palier avant,
- Mesurer une deuxième température de l'huile en aval dudit palier de guidage,
- Calculer une différence de température entre la deuxième température et la première température,
- Comparer la différence de température avec une différence de température attendue prédéterminée, et
- Lorsque la différence de température est supérieure à la différence de température attendue, émettre un signal de défaut de perméabilité du circuit de lubrification.

La première mesure de température est ainsi réalisée en amont de l'entrée d'huile dans le palier, à distance de ce dernier. La première mesure de température est réalisée au moyen d'un organe de mesure monté dans le boîtier de lubrification déjà présent dans les moteurs et permet de s'affranchir de l'ajout d'un organe de mesure supplémentaire. Par ailleurs, la première mesure de température est indépendante du palier et peut être utilisée quel que soit le positionnement du deuxième organe de mesure de température en aval du palier arrière ou en aval du palier avant.

Le boîtier de lubrification est aisément accessible pour la maintenance et est avantageusement déporté des paliers. La première mesure de température est accessible de manière pratique, sans augmentation de la complexité ou de l'encombrement.

Dans une forme de réalisation préférée, la turbomachine fonctionnant à un régime déterminé, la différence de température attendue est prédéterminée pour le régime déterminé. Pour un régime donné, le procédé selon l'invention permet avantageusement de déterminer une différence de températures attendue entre l'entrée et la sortie du circuit de lubrification. En effet, à iso-régime, une telle différence de température est simple à déterminer.

Dans une forme de réalisation, le procédé comprend une étape de détermination d'un degré de perméabilité du circuit de lubrification à partir d'une base de données associant une différence de température et un degré de perméabilité, le degré de perméabilité étant déterminé à partir de la différence de température obtenue.

Grâce à l'invention, le degré de perméabilité peut être déterminé de manière simple et rapide à partir de la différence de température entre l'amont et l'aval du palier de guidage. Le procédé permet ainsi d'alerter en cas d'obstruction trop importante du circuit de lubrification, ce qui permet de s'assurer d'un fonctionnement optimal du circuit de lubrification.

Dans une forme de réalisation, une première différence de température étant calculée à un premier instant, une deuxième différence de température étant calculée à un deuxième instant, postérieur au premier instant, le procédé comprend une étape de comparaison de la première différence de température et de la deuxième différence de température, de manière à déterminer une évolution de la perméabilité du circuit de lubrification. Un contrôle de l'évolution de la différence de température permet avantageusement de détecter une baisse du débit du flux d'huile, ce qui permet d'anticiper un défaut trop important de perméabilité et donc de lubrification de la turbomachine. Les opérations de maintenance peuvent ainsi être planifiées par avance, ce qui est avantageux.

L'invention concerne également un produit de type programme d'ordinateur, comprenant au moins une séquence d'instructions stockée et lisible par un processeur et qui, une fois lue par ce processeur, provoque la réalisation des étapes du procédé tel que présenté précédemment.

L'invention concerne en outre un support lisible par un ordinateur comportant le produit de type programme d'ordinateur tel que présenté précédemment.

L'invention concerne également un système moteur pour la mise en œuvre du procédé de contrôle de la perméabilité d'un circuit de lubrification tel que décrit précédemment, le système moteur comprenant :
- une turbomachine d'aéronef comprenant :
   - au moins un palier de guidage à surveiller dans lequel est monté rotatif un arbre de propulsion,
   - un circuit de lubrification pour lubrifier le palier de guidage, le circuit de lubrification étant configuré pour faire circuler un flux d'huile d'amont en aval entre une entrée d'huile du circuit de lubrification et une sortie d'huile du circuit de lubrification,
- un premier organe de mesure de la température du flux d'huile, le premier organe de mesure, monté en amont du palier de guidage dans le circuit de lubrification, étant configuré pour mesurer une première température de l'huile,
- un deuxième organe de mesure de la température du flux d'huile, le deuxième organe de mesure, monté en aval du palier de guidage dans le circuit de lubrification, étant configuré pour mesurer une deuxième température de l'huile,
- un calculateur configuré pour :
   - Calculer une différence de température entre la deuxième température et la première température,
   - Comparer la différence de température calculée avec une différence de température attendue prédéterminée enregistrée dans le calculateur, et
   - Lorsque la différence de température est supérieure à la différence de température attendue, émettre un signal de défaut de perméabilité du circuit de lubrification.

Le système moteur selon l'invention permet de mettre en œuvre le procédé au moyen de simples organes de mesure de la température positionnés en amont et en aval du palier de guidage. Le système moteur ne nécessite ainsi pas l'ajout de dispositifs supplémentaires importants qui augmenteraient la masse et l'encombrement de la turbomachine. De plus, les organes de mesure peuvent avantageusement être montés de manière simple et rapide sur des aéronefs existants.

De préférence, le calculateur est configuré pour déterminer la différence de température attendue à partir d'un régime de la turbomachine donné.

L'invention concerne également un système moteur pour la mise en œuvre du procédé de contrôle de la perméabilité d'un circuit de lubrification tel que décrit précédemment, le système moteur comprenant :
- une turbomachine d'aéronef s'étendant selon un axe longitudinal et comprenant :
   - successivement selon l'axe longitudinal, au moins un palier de guidage arrière, un palier de guidage avant, à surveiller dans lesquels est monté rotatif un arbre de propulsion, et un boîtier de lubrification comprenant au moins une pompe mécanique de circulation d'un flux d'huile, et un organe de transmission de la pression et de la température de l'huile,
   - un circuit de lubrification pour lubrifier chaque palier de guidage, le circuit de lubrification étant configuré pour faire circuler le flux d'huile d'amont en aval, entre une entrée d'huile du circuit de lubrification et une sortie d'huile du circuit de lubrification,
- un premier organe de mesure de la température du flux d'huile, le premier organe de mesure, monté en amont de chaque palier de guidage dans le circuit de lubrification, étant configuré pour mesurer une première température de l'huile, le premier organe de mesure étant monté dans le boîtier de lubrification à l'avant du palier avant,
- un deuxième organe de mesure de la température du flux d'huile, le deuxième organe de mesure, monté en aval du palier de guidage dans le circuit de lubrification, étant configuré pour mesurer une deuxième température de l'huile,
- un calculateur configuré pour :
   - Calculer une différence de température entre la deuxième température et la première température,
   - Comparer la différence de température calculée avec une différence de température attendue prédéterminée enregistrée dans le calculateur, et
   - Lorsque la différence de température est supérieure à la différence de température attendue, émettre un signal de défaut de perméabilité du circuit de lubrification.

Dans une forme de réalisation, le calculateur est configuré pour déterminer un degré de perméabilité du circuit de lubrification à partir d'une base de données accessible par le calculateur associant une différence de température et un degré de perméabilité, le degré de perméabilité étant déterminé à partir de la différence de température obtenue.

De préférence, la différence de température attendue dépend d'un régime prédéterminé de la turbomachine. Aussi, pour un régime connu de la turbomachine et une différence de température calculée, il est ainsi simple de déterminer le degré de perméabilité du circuit de lubrification. Il n'est avantageusement pas nécessaire de procéder à une manipulation particulière par un opérateur. En particulier, il n'est pas nécessaire d'accéder à une entrée du circuit de lubrification particulière, comme cela était le cas dans l'art antérieur.

Dans une première forme de réalisation, le premier organe de mesure comprend un organe de transmission de la pression et de la température situé dans le circuit de lubrification en amont du palier de guidage à surveiller, permettant de limiter l'ajout de dispositifs supplémentaires.

De manière alternative, le premier organe de mesure est un capteur monté de manière rapportée dans le circuit de lubrification en amont du palier de guidage à surveiller, ce qui permet de calibrer de manière optimale l'organe de mesure.

Dans une première forme de réalisation, le circuit de lubrification comprend au moins un bouchon et le deuxième organe de mesure est monté sur ledit bouchon. Un tel bouchon est utilisé pour la vidange et permet d'accéder à la deuxième température en amont du palier de guidage. De préférence, le deuxième organe de mesure est un patch adhésif qui permet de déterminer la température de l'huile de manière indirecte par détermination de la température du bouchon.

Dans une forme de réalisation, le deuxième organe de mesure est un patch adhésif thermosensible collé sur le bouchon.

Un tel patch adhésif peut avantageusement être positionné de manière simple et rapide sur un bouchon existant, ce qui limite le remplacement de pièces du circuit de lubrification. De plus, un tel organe de mesure permet une lecture simple et rapide de la température.

De manière préférée, le deuxième organe de mesure est un patch adhésif amovible. Celui-ci peut ainsi avantageusement être mis en place simplement et rapidement lors d'une opération de maintenance quelconque (non dédiée au circuit de lubrification) par exemple et retiré à la fin de l'opération de maintenance. Un patch amovible permet également de limiter tout risque d'altération des composants du circuit de lubrification puisqu'aucun outillage mécanique n'est nécessaire pour le mettre en place. De plus, un tel patch présente un coût limité. Autrement dit, la perméabilité du circuit de lubrification peut aisément être contrôlée grâce au premier organe de mesure présent dans l'organe de transmission de la pression et de la température présent sur tous les moteurs et grâce à l'ajout simple d'un patch amovible.

Dans une forme de réalisation, le bouchon est un bouchon magnétique.

Dans une forme de réalisation, le circuit de lubrification comprend au moins un bouchon et le deuxième organe de mesure est monté dans ledit bouchon.

Dans une deuxième forme de réalisation, le deuxième organe de mesure est une sonde de température montée directement dans le bouchon, permettant une prise de température directe du flux d'huile, ce qui permet un résultat fiable.

Dans une troisième forme de réalisation, le deuxième organe de mesure comprend un capteur de température intégré au bouchon, ce qui permet de réduire l'encombrement tout en obtenant un relevé fiable de la température.

Dans une quatrième forme de réalisation, le deuxième organe de mesure comprend un capteur de température monté dans un conduit de circulation du système de lubrification. Une telle forme de réalisation permet une température fiable du flux d'huile en mouvement dans le circuit de lubrification.

L'invention porte également sur un aéronef comprenant au moins un système moteur tel que décrit précédemment.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un système moteur comprenant une turbomachine d'aéronef et un circuit de lubrification selon l'art antérieur.
La [Fig.2] est une représentation schématique d'un système moteur comprenant une turbomachine d'aéronef et un circuit de lubrification selon une forme de réalisation de l'invention.
La [Fig.3] est une représentation schématique du circuit de lubrification de la [Fig.2].
La [Fig.4] est un graphique représentant l'évolution de la différence de température entre l'entrée et la sortie du circuit de lubrification en fonction du débit de circulation d'huile dans le circuit de lubrification de la [Fig.3].
La [Fig.5] est une représentation schématique d'une base de données associant, pour une pluralité de régimes moteur, un débit à une différence de température attendue de la [Fig.3].
La [Fig.6] est un schéma des étapes d'un procédé de contrôle selon un mode de mise en œuvre de l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

En référence à la [Fig.2] et à la [Fig.3], il est représenté un système moteur SM pour aéronef selon une forme de réalisation de l'invention. Le système moteur SM comprend une turbomachine 1 comprenant un circuit de lubrification 5 qui injecte de l'huile pour lubrifier la turbomachine 1 et drainer les calories, de manière à limiter les risques de surchauffe de la turbomachine 1.

En référence à la [Fig.2], dans cet exemple, la turbomachine 1 s'étend longitudinalement selon un axe X. Dans la suite de ce document, les termes « avant » et « arrière » sont définis par rapport à l'axe longitudinal X qui s'étend de l'arrière vers l'avant de la turbomachine 1. Comme cela est connu, la turbomachine 1 comprend un générateur de gaz 10 comportant un étage de compression 11 et un étage de turbine 12 reliés à un arbre de propulsion 2 pour entraîner en rotation un organe propulsif (non représenté). La turbomachine 1 est configurée pour fonctionner à un régime moteur R.

Comme représenté sur la [Fig.2], l'arbre de propulsion 2 s'étend suivant l'axe longitudinal X de la turbomachine 1. L'arbre de propulsion 2 est guidé en rotation selon l'axe longitudinal X par une pluralité de paliers de guidage 3, 4 montés dans le carter de la turbomachine 1. Plus précisément, l'arbre de propulsion 2 est guidé en rotation à l'arrière du générateur de gaz 10 par un palier arrière 3 et à l'avant du générateur de gaz 10 par un palier avant 4. De manière connue, chaque palier de guidage 3, 4 comprend une pluralité de roulements 31, 41 montés entre deux bagues. L'arbre de propulsion 2 est inséré dans chacun des paliers de guidage 3, 4. Les paliers de guidage 3, 4 ne seront pas décrits plus en détails dans ce document.

Le circuit de lubrification 5 est configuré pour limiter l'échauffement de la turbomachine 1 dû à la rotation de l'arbre de propulsion 2 et donc au frottement entre les différents organes de la turbomachine 1. Pour cela, le circuit de lubrification 5 est configuré pour injecter de l'huile dans la turbomachine 1, en particulier au niveau des paliers de guidage 3, 4. Par la suite, le circuit de lubrification 5 est décrit pour la lubrification d'un palier de guidage 3, 4 à surveiller. Dans cet exemple le palier de guidage 3, 4 à surveiller correspond au palier arrière 3, cependant le palier de guidage 3, 4 à surveiller pourrait alternativement être le palier avant 4. De même, on décrit ci-après la circulation de l'huile dans les paliers de guidage 3, 4 et en particulier dans le palier arrière 3, mais on comprendra cependant que l'huile de lubrification circule dans plusieurs organes de la turbomachine 1.

En référence à la [Fig.2] et à la [Fig.3], le circuit de lubrification 5 s'étend dans la turbomachine 1 de part et d'autre du palier arrière 3. Le circuit de lubrification 5 comprend une entrée d'huile 51, une sortie d'huile 52 et une pluralité de conduits de circulation 53 d'huile montés entre l'entrée d'huile 51 et la sortie d'huile 52. Un flux d'huile H (représenté sur la [Fig.2] par des flèches continues) circule dans le circuit de lubrification 5 d'amont en aval depuis l'entrée d'huile 51 vers la sortie d'huile 52. Autrement dit, le circuit de lubrification 5 s'étend en amont et en aval du palier arrière 3. Dans cet exemple, comme représenté sur la [Fig.2], par « entrée » d'huile 51 et « sortie » d'huile 52, on entend l'entrée et la sortie de l'huile dans le générateur de gaz 10. L'entrée d'huile 51 et la sortie d'huile 52 pourraient alternativement être placées à des positions différentes respectivement en amont et en aval du palier arrière 3.

Plus précisément, comme représenté sur la [Fig.3], le circuit de lubrification 5 comprend un réservoir de stockage 55 de l'huile H et une pompe mécanique 56 pour faire circuler le flux d'huile H dans les conduits de circulation 53. Le flux d'huile H est alors configuré pour traverser l'ensemble de la turbomachine 1. En particulier, le flux d'huile H est configuré pour entrer via l'entrée d'huile 51, traverser le palier arrière 3 et sortir via la sortie d'huile 52. Pour traverser le palier arrière 3, le circuit de lubrification 5 comprend un organe d'injection 54 (représenté sur la [Fig.2]) monté directement en amont du palier arrière 3. Le flux d'huile H est ensuite configuré pour circuler dans le circuit de lubrification 5 en sortie du palier arrière 3 au moyen d'une deuxième pompe mécanique 56A. Le circuit de lubrification 5 comprend également un dispositif de refroidissement 57 configuré pour refroidir le flux d'huile H après que celui-ci ait été réchauffé dans les conduits de circulation 53 par exemple au contact des roulements du palier arrière 3.

Plus précisément, en référence aux figures 2 et 3, la turbomachine 1 comprend un système de service EQ qui comporte une pluralité d'équipements de l'aéronef. En particulier, le système de service EQ comprend un boîtier de lubrification 8 dans lequel est montée la pompe mécanique 56 de circulation de l'huile. Le boîtier de lubrification 8 est monté selon l'axe longitudinal X en avant du palier avant 4 afin de faciliter son accessibilité. Autrement dit, le boîtier de lubrification 8 est monté extérieurement au générateur de gaz 10.

Dans une forme de réalisation, le circuit de lubrification 5 comprend un organe de transmission TR de la pression et de la température, configuré pour mesurer la pression et la température du flux d'huile H qui circule dans le circuit de lubrification 5. De préférence, l'organe de transmission TR est positionné sur le circuit de lubrification 5 entre la première pompe mécanique 56 et l'entrée d'huile 51 du palier arrière 3. Autrement dit, l'organe de transmission TR est monté en amont du palier arrière 3. En pratique, l'organe de transmission TR est monté dans le boîtier de lubrification 8. L'organe de transmission TR permet de transmettre la pression et la température du flux d'huile H à un calculateur afin de communiquer une information ou alarme au pilote en cas de besoin.

De manière préférée, le circuit de lubrification 5 comprend également un filtre 58 monté sur le circuit de lubrification 5 entre la première pompe mécanique 56 et l'entrée d'huile 51 du palier arrière 3. De préférence encore, le filtre 58 est monté sur le circuit de lubrification 5 entre la première pompe mécanique 56 et l'organe de transmission TR. Autrement dit, le filtre 58 est monté dans le boîtier de lubrification 8. Le filtre 58 permet de retenir les particules présentes dans l'huile, de manière à remettre en circulation une huile propre dans le circuit de lubrification 5 et à limiter ainsi tout risque d'obstruction du circuit de lubrification 5.

Dans une forme de réalisation préférée, toujours en référence à la [Fig.3], le circuit de lubrification 5 comprend également un bouchon, par exemple un bouchon magnétique BM, monté sur le circuit de lubrification 5 en aval de la sortie d'huile 52 du palier arrière 3. Un tel bouchon magnétique BM comprend généralement un filtre, par exemple une crépine, et est monté sur le circuit de lubrification 5 de manière à retenir les plus grosses particules d'impuretés présentes dans l'huile en sortie des paliers de guidage 3, 4.

Selon un aspect de l'invention, le système moteur SM comprend un premier organe de mesure 6 et un deuxième organe de mesure 7 de la température du flux d'huile H. A ce titre, chaque organe de mesure 6, 7, comprend de préférence un capteur de température.

Comme représenté sur les figures 2 et 3, le premier organe de mesure 6 est monté en amont du palier arrière 3 et est configuré pour mesurer une première température T1 de l'huile H dans le circuit de lubrification 5 en amont du palier arrière 3. Le deuxième organe de mesure 7 est monté en aval du palier arrière 3 et est configuré pour mesurer une deuxième température T2 de l'huile H dans le circuit de lubrification 5 en aval du palier arrière 3. Comme décrit précédemment, le premier organe de mesure 6 et le deuxième organe de mesure 7 pourraient alternativement être montés en amont et en aval du palier avant 4.

De manière préférée, le premier organe de mesure 6 comprend l'organe de transmission TR.

Dans une première forme de réalisation, le premier organe de mesure 6 correspond à l'organe de transmission TR monté sur le circuit de lubrification 5 en amont du palier arrière 3, ce qui permet de limiter l'ajout d'éléments supplémentaires dans le circuit de lubrification 5. De plus, l'organe de transmission TR positionné en avant du générateur de gaz 10, c'est-à-dire à distance des palier 3, 4, permet une première mesure de température quel que soit le palier de guidage 3, 4 à surveiller.

Dans une deuxième forme de réalisation, le premier organe de mesure 6 est un capteur monté de manière rapportée sur le circuit de lubrification 5. A titre d'exemple, le premier organe de mesure 6 se présente sous la forme d'un patch adhésif collé sur l'un des conduits de circulation 53 du circuit de lubrification 5 afin de mesurer la température d'un conduit de circulation 53 et d'en déduire la température de l'huile H. Une telle forme de réalisation permet de monter le premier organe de mesure 6 de manière simple et rapide et permet également d'ajouter simplement le premier organe de mesure 6 sur des systèmes moteur SM existants.

De manière alternative, le premier organe de mesure 6 se présente sous la forme d'un capteur de température, par exemple une sonde, monté à l'intérieur de l'un des conduits de circulation 53. Le premier organe de mesure 6 pourrait alternativement se présenter sous une forme différente, par exemple sous la forme d'une sonde de mesure de la température positionnée en contact avec l'un des conduits de circulation 53. Le premier organe de mesure 6 pourrait également être positionné au niveau d'un conduit d'alimentation instrumenté.

Dans une forme de réalisation, le deuxième organe de mesure 7 se présente sous la forme d'un patch adhésif collé sur l'un des conduits de circulation 53 du circuit de lubrification 5 en aval du palier arrière 3. Le patch adhésif pourrait alternativement être collé sur le bouchon magnétique BM. Il va de soi que le deuxième organe de mesure 7 pourrait être collé sur un bouchon différent.

Un patch adhésif collé sur le bouchon magnétique BM peut être mis en place de manière simple et rapide, sans qu'il soit nécessaire de démonter un quelconque élément du circuit de lubrification 5. Dans cette forme de réalisation, le premier organe de mesure 6 correspondant à l'organe de transmission TR monté dans le boîtier de lubrification 8 et le deuxième organe de mesure 7 correspondant à un patch adhésif collé sur le bouchon magnétique BM permet de définir les températures en amont et en aval du palier 3, 4 à surveiller, sans qu'une préparation importante ne soit nécessaire. L'apposition d'un unique patch adhésif permet de mesurer une différence de températures dans le circuit de lubrification 5 entre l'amont et l'aval de l'un des paliers 3, 4, ce qui limite de manière importante les coûts et les délais de maintenance. De plus, cela peut être mis en place sur tout type de moteur existant, sans nécessiter un quelconque démontage ou un remplacement d'une pièce.

De manière préférée, le patch adhésif est thermosensible et permet par exemple la lecture de la température par un changement de couleur ou directement sur une échelle graduée, permettant de déterminer la température de manière simple et rapide.

De préférence encore, le patch adhésif est amovible. Le deuxième organe de mesure peut ainsi facilement être retiré après l'opération de maintenance.

Dans une forme de réalisation alternative, le deuxième organe de mesure 7 est une sonde de température montée directement dans le bouchon magnétique BM ou dans l'un des conduits de circulation 53, ce qui permet une mesure fiable et directe. Le deuxième organe de mesure 7 pourrait alternativement se présenter sous une forme différente, par exemple sous la forme d'une sonde de mesure de la température positionnée en contact avec l'un des conduits de circulation 53. Le deuxième organe de mesure 7 pourrait également être monté dans un conduit de récupération d'huile.

Toujours en référence à la [Fig.3], le système moteur SM comprend un calculateur 9, de préférence relié électriquement au premier organe de mesure 6 et au deuxième organe de mesure 7. Le calculateur 9 est configuré pour recevoir une première température T1 mesurée par le premier organe de mesure 6 en amont du palier arrière 3 et une deuxième température T2 mesurée par le deuxième organe de mesure 7 en aval du palier arrière 3 et pour calculer une différence de température ΔT entre la deuxième température T2 et la première température T1 (ΔT=T2-T1). De manière alternative, la première température T1 et la deuxième température T2 pourraient être relevées (par exemple lues sur un patch adhésif) par un opérateur qui pourrait entrer les valeurs dans le calculateur 9. Le calculateur 9 peut être intégré à un module de surveillance moteur, également connu sous la désignation « Health Monitoring ».

Le calculateur 9 est également configuré pour comparer la différence de température ΔT avec une différence de température attendue ΔT0 prédéterminée. La différence de température attendue ΔT0 correspond de préférence à un régime R déterminé de la turbomachine 1. Lorsque la différence de température ΔT est supérieure à la différence de température attendue ΔT0, le calculateur 9 est configuré pour émettre un signal de défaut de perméabilité du circuit de lubrification 5.

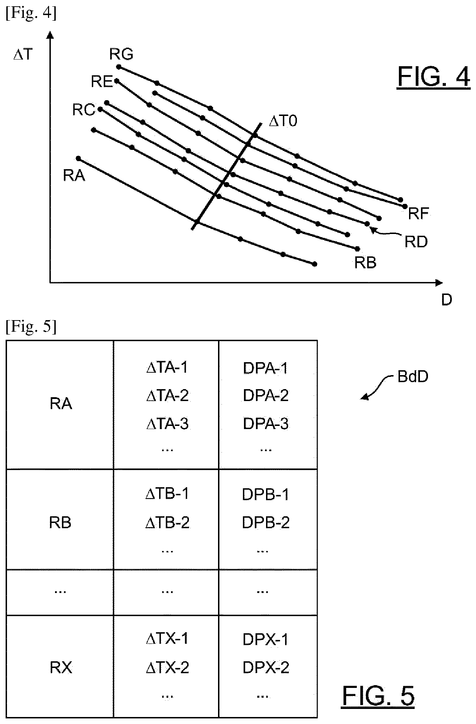

En effet, comme représenté sur la [Fig.4], pour un régime R (RA, RB, ...) déterminé de la turbomachine 1, la différence de température ΔT évolue en fonction du débit D du flux d'huile H dans le circuit de lubrification 5 (et plus particulièrement dans le palier arrière 3). Plus précisément, pour un régime R déterminé, plus le débit D du flux d'huile H est bas, plus la différence de température ΔT entre l'amont et l'aval du palier arrière 3 est élevée. Selon un aspect de l'invention, une différence de température ΔT supérieure à la différence de température attendue ΔT0 indique que le débit D du flux d'huile H dans le circuit de lubrification 5 est insuffisant. Autrement dit, le circuit de lubrification 5 est obstrué et sa perméabilité est limitée. Par « perméabilité limitée », on entend qu'une quantité insuffisante d'huile circule dans le circuit de lubrification 5 pour lubrifier la turbomachine 1 de manière optimale.

Dans une forme de réalisation, le calculateur 9 est en outre configuré pour déterminer un degré de perméabilité DP du circuit de lubrification 5 à partir de la différence de température ΔT obtenue pour le régime R déterminé. De manière préférée, le degré de perméabilité DP est déterminé à partir d'une base de données BdD associant un régime R, une différence de température ΔT et un degré de perméabilité DP.

A ce titre, il est représenté sur la [Fig.5], un exemple d'une base de données BdD dans laquelle pour un régime déterminé RA (RB, ... RX), chaque différence de température ΔTA-1, ΔTA-2, ΔTA-3, ... (ΔTB-1, ΔTB-2, ..., ΔTX-1, ΔTX-2, ...) est associée à un degré de perméabilité DPA-1, DPA-2, DPA-3, ... (DPB-1, DPB-2, ..., DPX-1, DPX-2, ...).

Dans une forme de réalisation, le calculateur 9 est configuré pour calculer, à un premier instant, une première différence de température ΔT1 entre la première température T1 et la deuxième température T2 et, à un deuxième instant, postérieur au premier instant, une deuxième différence de température ΔT2 entre la première température T1 et la deuxième température T2. Le calculateur 9 est alors configuré pour comparer la première différence de température ΔT1 et la deuxième différence de température ΔT2 et pour déterminer une évolution de la différence de température ΔT entre le premier instant et le deuxième instant. Une telle forme de réalisation permet d'anticiper l'obstruction du palier arrière 3 du circuit de lubrification 5 en détectant une élévation de la différence de température ΔT correspondant à une baisse du débit D.

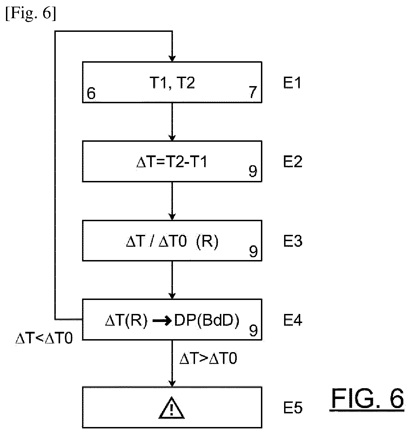

Il va dorénavant être décrit un procédé de détermination de la perméabilité d'un circuit de lubrification 5 d'une turbomachine 1 d'aéronef selon un mode de mise en œuvre de l'invention, en référence à la [Fig.6]. Dans cet exemple, un flux d'huile H circule dans le circuit de lubrification 5 et circule plus particulièrement d'amont en aval dans le générateur de gaz 10 via le palier de guidage 3, 4 à surveiller. Le procédé va être décrit pour la surveillance du palier arrière 3, cependant le procédé selon l'invention s'applique également à la surveillance du palier avant 4. De même, pour une turbomachine 1 comprenant un nombre différent de paliers de guidage, l'invention s'applique avec les mêmes avantages à tout palier de guidage d'une turbomachine d'aéronef. Dans cet exemple, la turbomachine 1 fonctionne à un régime R déterminé.

Selon l'invention, la perméabilité du circuit de lubrification 5 est déterminée à partir d'une différence de température entre l'amont et l'aval du palier de guidage 3, 4 à surveiller, dans cet exemple du palier arrière 3. Pour cela, dans cet exemple, le premier organe de mesure 6 comprend l'organe de transmission TR monté dans le boîtier de lubrification 8 à l'avant du palier avant 4 et le deuxième organe de mesure 7 est un patch adhésif collé sur le bouchon magnétique BM.

Le procédé comprend une première étape E1 de mesure, par le premier organe de mesure 6 d'une première température T1 du flux d'huile H en amont du palier arrière 3 et par le deuxième organe de mesure 7 d'une deuxième température T2 du flux d'huile H en aval du palier arrière 3.

Dans une deuxième étape E2, le calculateur 9 calcule une différence de température ΔT entre l'amont et l'aval du palier arrière 3 (ΔT=T2-T1). Le calculateur 9 compare alors, dans une étape E3, la différence de température ΔT calculée avec une différence de température attendue ΔT0 prédéterminée pour le régime R déterminé de la turbomachine 1.

Dans une forme de réalisation, le calculateur 9 détermine, dans une étape E4, un degré de perméabilité DP du circuit de lubrification 5 à partir de la différence de température ΔT obtenue pour le régime R déterminé. Pour cela, le calculateur 9 détermine le degré de perméabilité DP à partir d'une base de données BdD associant, pour le régime déterminé de la turbomachine 1, un degré de perméabilité DP-1, DP-2, ... à une différence de température ΔT-1, ΔT-2, ....

Lorsque la différence de température ΔT calculée est supérieure à la différence de température attendue ΔT0, le calculateur 9 détecte que la perméabilité du circuit de lubrification 5 est insuffisante et émet un signal de défaut de perméabilité du circuit de lubrification 5, dans une étape E5.

En effet, la différence de température ΔT est directement liée au débit D du flux d'huile H dans le circuit de lubrification 5. Aussi, lorsque le palier arrière 3 est obstrué par exemple par la présence de dépôts, le débit du flux d'huile H diminue, la perméabilité du palier arrière 3 (et donc du circuit de lubrification 5) est limitée.

Dans une forme de réalisation, le calculateur 9 calcule, à un premier instant, une première différence de température ΔT1 entre la première température T1 et la deuxième température T2. A un deuxième instant, le calculateur 9 calcule une deuxième différence ΔT2 entre la première température T1 et la deuxième température T2. Le calculateur 9 compare alors la première différence de température ΔT1 et la deuxième différence de température ΔT2 et détermine une évolution de la différence de température ΔT entre le premier instant et le deuxième instant. En cas de détection d'une élévation de la différence de température ΔT entre le premier instant et le deuxième instant, le calculateur 9 envoi, dans cet exemple, un signal d'alerte correspondant à une détection d'une baisse du débit D. Dans cet exemple, un tel signal d'alerte est émis même lorsque le flux d'huile H circule toujours de manière suffisante. Une telle forme de réalisation permet par exemple d'anticiper un contrôle ultérieur permettant de ne pas attendre que le circuit de lubrification 5 fonctionne de manière dégradé.

Le procédé de détermination selon l'invention permet de prévenir l'obstruction du circuit de lubrification et plus particulièrement du palier de guidage à surveiller de manière simple et rapide en calculant une différence de température entre l'amont et l'aval dudit palier de guidage. Une telle mesure peut être réalisée à tout instant pendant une opération de maintenance quelconque (non dédiée au circuit de lubrification), voire même lorsque l'aéronef est en vol.

## Revendications

1. Procédé de contrôle de la perméabilité d'un circuit de lubrification (5) d'une turbomachine (1) d'aéronef, la turbomachine (1) s'étendant selon un axe longitudinal (X) orienté d'arrière vers l'avant et comprenant successivement selon l'axe longitudinal (X) au moins un palier de guidage arrière (3), un palier de guidage avant (4), dans lesquels est monté rotatif un arbre de propulsion (2), et un boîtier de lubrification (8) comprenant au moins une pompe mécanique (56) de circulation d'un flux d'huile (H) et un organe de transmission (TR) de la pression et de la température de l'huile, le circuit de lubrification (5) étant configuré pour faire circuler le flux d'huile (H) d'amont en aval entre une entrée d'huile (51) du circuit de lubrification (5) et une sortie d'huile (52) du circuit de lubrification (5) pour lubrifier chaque palier de guidage (3, 4), le procédé comprenant les étapes consistant à :
- Mesurer une première température (T1) de l'huile en amont de l'un des paliers de guidage (3, 4), la première température (T1) étant mesurée au moyen d'un premier organe de mesure (6) de la température du flux d'huile (H), monté dans le boîtier de lubrification (8) à l'avant du palier avant (4),
- Mesurer une deuxième température (T2) de l'huile en aval dudit palier de guidage (3, 4),
- Calculer une différence de température (ΔT) entre la deuxième température (T2) et la première température (T1),
- Comparer la différence de température (ΔT) avec une différence de température attendue (ΔT0) prédéterminée, et
- Lorsque la différence de température (ΔT) est supérieure à la différence de température attendue (ΔT0), émettre un signal de défaut de perméabilité du circuit de lubrification (5).

2. Procédé de contrôle selon la revendication 1, dans lequel, la turbomachine (1) fonctionnant à un régime (R) déterminé, la différence de température attendue (ΔT0) est prédéterminée pour le régime (R) déterminé.

3. Procédé de contrôle selon l'une des revendications 1 à 2, comprenant une étape de détermination d'un degré de perméabilité (DP) du circuit de lubrification (5) à partir d'une base de données (BdD) associant une différence de température (ΔT) et un degré de perméabilité (DP), le degré de perméabilité (DP) étant déterminé à partir de la différence de température (ΔT) obtenue.

4. Procédé de contrôle selon l'une des revendications 1 à 3, dans lequel, une première différence de température (ΔT1) étant calculée à un premier instant, une deuxième différence de température (ΔT2) étant calculée à un deuxième instant, postérieur au premier instant, le procédé comprend une étape de comparaison de la première différence de température (ΔT1) et de la deuxième différence de température (ΔT2), de manière à déterminer une évolution de la perméabilité du circuit de lubrification (5).

5. Produit de type programme d'ordinateur, comprenant au moins une séquence d'instructions stockée et lisible par un processeur et qui, une fois lue par ce processeur, conduit le système moteur (SM) selon l'une des revendications 6 à 13 à réaliser les étapes du procédé selon l'une des revendications 1 à 4.

6. Système moteur (SM) pour la mise en œuvre du procédé de contrôle de la perméabilité d'un circuit de lubrification (5) selon l'une des revendications 1 à 4, le système moteur (SM) comprenant :
- une turbomachine (1) d'aéronef s'étendant selon un axe longitudinal (X) et comprenant :
• successivement selon l'axe longitudinal (X), au moins un palier de guidage arrière (3), un palier de guidage avant (4), à surveiller dans lesquels est monté rotatif un arbre de propulsion (2), et un boîtier de lubrification (8) comprenant au moins une pompe mécanique (56) de circulation d'un flux d'huile (H), et un organe de transmission (TR) de la pression et de la température de l'huile,
• un circuit de lubrification (5) pour lubrifier chaque palier de guidage (3, 4), le circuit de lubrification (5) étant configuré pour faire circuler le flux d'huile (H) d'amont en aval, entre une entrée d'huile (51) du circuit de lubrification (5) et une sortie d'huile (52) du circuit de lubrification (5),
- un premier organe de mesure (6) de la température du flux d'huile (H), le premier organe de mesure (6), monté en amont de chaque palier de guidage (3, 4) dans le circuit de lubrification (5), étant configuré pour mesurer une première température (T1) de l'huile, le premier organe de mesure (6) étant monté dans le boîtier de lubrification (8) à l'avant du palier avant (4),
- un deuxième organe de mesure (7) de la température du flux d'huile (H), le deuxième organe de mesure (7), monté en aval du palier de guidage (3, 4) dans le circuit de lubrification (5), étant configuré pour mesurer une deuxième température (T2) de l'huile,
- un calculateur (9) configuré pour :
• Calculer une différence de température (ΔT) entre la deuxième température (T2) et la première température (T1),
• Comparer la différence de température (ΔT) calculée avec une différence de température attendue (ΔT0) prédéterminée enregistrée dans le calculateur (9), et
• Lorsque la différence de température (ΔT) est supérieure à la différence de température attendue (ΔT0), émettre un signal de défaut de perméabilité du circuit de lubrification (5).

7. Système moteur (SM) selon la revendication 6, dans lequel le calculateur (9) est configuré pour déterminer un degré de perméabilité (DP) du circuit de lubrification (5) à partir d'une base de données (BdD) accessible par le calculateur (9) et associant une différence de température (ΔT) et un degré de perméabilité (DP), le degré de perméabilité (DP) étant déterminé à partir de la différence de température (ΔT) obtenue.

8. Système moteur (SM) selon l'une des revendications 6 à 7, dans lequel le premier organe de mesure (6) comprend un organe de transmission (TR) de la pression et de la température situé dans le circuit de lubrification (5) en amont du palier de guidage (3, 4) à surveiller.

9. Système moteur (SM) selon l'une des revendications 6 à 8, dans lequel le circuit de lubrification (5) comprend au moins un bouchon (BM) et le deuxième organe de mesure (7) est monté sur ledit bouchon (BM).

10. Système moteur (SM) selon la revendication 9, dans lequel le deuxième organe de mesure (7) est un patch adhésif thermosensible collé sur le bouchon (BM).

11. Système moteur (SM) selon la revendication 10, dans lequel le deuxième organe de mesure (7) est un patch adhésif amovible.

12. Système moteur (SM) selon l'une des revendications 6 à 8, dans lequel le circuit de lubrification (5) comprend au moins un bouchon (BM) et le deuxième organe de mesure (7) est monté dans ledit bouchon (BM).

13. Système moteur (SM) selon l'une des revendications 6 à 8, dans lequel le deuxième organe de mesure (7) comprend un capteur de température monté dans un conduit de circulation du circuit de lubrification (5).

14. Aéronef comprenant au moins un système moteur (SM) selon l'une des revendications 6 à 13.

## Patentansprüche

1. Verfahren zur Überprüfung der Durchlässigkeit eines Schmierkreises (5) einer Flugzeugturbomaschine (1), wobei sich die Turbomaschine (1) gemäß einer von hinten nach vorne ausgerichteten Längsachse (X) erstreckt und gemäß der Längsachse (X) nacheinander mindestens ein hinteres Führungslager (3), ein vorderes Führungslager (4), in denen eine Antriebswelle (2) drehbar gelagert ist, und ein Schmiergehäuse (8) umfasst, das mindestens eine mechanische Pumpe (56) zum Umwälzen eines Ölstroms (H) und ein Übertragungselement (TR) für den Druck und die Temperatur des Öls umfasst, wobei der Schmierkreis (5) so konfiguriert ist, dass der Ölstrom (H) von stromaufwärts nach stromabwärts zwischen einem Öleinlass (51) des Schmierkreises (5) und einem Ölauslass (52) des Schmierkreises (5) zirkuliert, um jedes Führungslager (3, 4) zu schmieren, wobei das Verfahren die folgenden Schritte umfasst:
- Messen einer ersten Temperatur (T1) des Öls stromaufwärts von einem der Führungslager (3, 4), wobei die erste Temperatur (T1) mittels einer ersten Messvorrichtung (6) für die Temperatur des Ölstroms (H) gemessen wird, die im Schmiergehäuse (8) vor dem vorderen Lager (4) angebracht ist,
- Messen einer zweiten Temperatur (T2) des Öls stromabwärts des Führungslagers (3, 4),
- Berechnen einer Temperaturdifferenz (ΔT) zwischen der zweiten Temperatur (T2) und der ersten Temperatur (T1),
- Vergleichen der Temperaturdifferenz (ΔT) mit einer vorbestimmten erwarteten Temperaturdifferenz (ΔT0), und
- wenn die Temperaturdifferenz (ΔT) größer als die erwartete Temperaturdifferenz (ΔT0) ist, Ausgeben eines Signals für einen Durchlässigkeitsfehler des Schmierkreises (5).

2. Überwachungsverfahren nach Anspruch 1, wobei bei einer mit einer bestimmten Drehzahl (R) betriebenen Turbomaschine (1) die erwartete Temperaturdifferenz (ΔT0) für die bestimmte Drehzahl (R) vorgegeben ist.

3. Überwachungsverfahren nach einem der Ansprüche 1 bis 2, umfassend einen Schritt zur Bestimmung eines Durchlässigkeitsgrades (DP) des Schmierkreises (5) anhand einer Datenbank (BdD), die eine Temperaturdifferenz (ΔT) einem Durchlässigkeitsgrad (DP) zuordnet, wobei der Durchlässigkeitsgrad (DP) anhand der erhaltenen Temperaturdifferenz (ΔT) bestimmt wird.

4. Überwachungsverfahren nach einem der Ansprüche 1 bis 3, wobei bei einer ersten zu einem ersten Zeitpunkt berechneten Temperaturdifferenz (ΔT1) eine zweite Temperaturdifferenz (ΔT2) zu einem zweiten Zeitpunkt, der nach dem ersten Zeitpunkt liegt, berechnet wird, das Verfahren einen Schritt des Vergleichens der ersten Temperaturdifferenz (ΔT1) und der zweiten Temperaturdifferenz (ΔT2) umfasst, um eine Entwicklung der Durchlässigkeit des Schmierkreises (5) zu bestimmen.

5. Computerprogrammprodukt, das mindestens eine von einem Prozessor gespeicherte und lesbare Befehlsfolge umfasst, die, sobald sie von diesem Prozessor gelesen wurde, das Triebwerkssystem (SM) nach einem der Ansprüche 6 bis 13 dazu veranlasst, die Schritte des Verfahrens nach einem der Ansprüche 1 bis 4 auszuführen.

6. Triebwerkssystem (SM) zur Durchführung des Verfahrens zur Überwachung der Durchlässigkeit eines Schmierkreises (5) nach einem der Ansprüche 1 bis 4, wobei das Triebwerkssystem (SM) umfasst:
- eine Flugzeugturbomaschine (1), die sich gemäß einer Längsachse (X) erstreckt und umfasst:
• nacheinander gemäß der Längsachse (X) mindestens ein hinteres Führungslager (3), ein vorderes Führungslager (4), die zu überwachen sind, in denen eine Antriebswelle (2) drehbar gelagert ist, und ein Schmiergehäuse (8), das mindestens eine mechanische Pumpe (56) zum Umwälzen eines Ölstroms (H) und ein Übertragungselement (TR) für den Druck und die Temperatur des Öls umfasst,
• einen Schmierkreis (5) zur Schmierung jedes Führungslagers (3, 4), wobei der Schmierkreis (5) so konfiguriert ist, dass der Ölstrom (H) von stromaufwärts nach stromabwärts zwischen einem Öleinlass (51) des Schmierkreises (5) und einem Ölauslass (52) des Schmierkreises (5) zirkuliert,
- ein erstes Messelement (6) der Temperatur des Ölstroms (H), wobei das erste Messelement (6), das im Schmierkreis (5) stromaufwärts jedes Führungslagers (3, 4) angeordnet ist, zur Messung einer ersten Öltemperatur (T1) konfiguriert ist, wobei das erste Messelement (6) im Schmiergehäuse (8) vor dem vorderen Lager (4) angeordnet ist,
- ein zweites Messelement (7) für die Temperatur des Ölstroms (H), wobei das zweite Messelement (7), das im Schmierkreis (5) stromabwärts des Führungslagers (3, 4) angeordnet ist, zur Messung einer zweiten Öltemperatur (T2) konfiguriert ist,
- einen Rechner (9), der konfiguriert ist, um:
• eine Temperaturdifferenz (ΔT) zwischen der zweiten Temperatur (T2) und der ersten Temperatur (T1) zu berechnen,
• die berechnete Temperaturdifferenz (ΔT) mit einer im Rechner (9) gespeicherten, vorgegebenen erwarteten Temperaturdifferenz (ΔT0) zu vergleichen, und
• wenn die Temperaturdifferenz (ΔT) größer als die erwartete Temperaturdifferenz (ΔT0) ist, ein Signal für einen Durchlässigkeitsfehler des Schmierkreises (5) auszugeben.

7. Triebwerkssystem (SM) nach Anspruch 6, wobei der Rechner (9) so konfiguriert ist, dass er einen Durchlässigkeitsgrad (DP) des Schmierkreises (5) anhand einer für den Rechner (9) zugänglichen Datenbank (BdD) ermittelt und eine Temperaturdifferenz (ΔT) einem Durchlässigkeitsgrad (DP) zuordnet, wobei der Durchlässigkeitsgrad (DP) anhand der ermittelten Temperaturdifferenz (ΔT) bestimmt wird.

8. Triebwerkssystem (SM) nach einem der Ansprüche 6 bis 7, wobei das erste Messelement (6) ein Druck- und Temperaturübertragungselement (TR) umfasst, das sich im Schmierkreis (5) stromaufwärts des zu überwachenden Führungslagers (3, 4) befindet.

9. Triebwerkssystem (SM) nach einem der Ansprüche 6 bis 8, wobei der Schmierkreis (5) mindestens einen Stopfen (BM) umfasst und das zweite Messelement (7) an diesem Stopfen (BM) angebracht ist.

10. Triebwerkssystem (SM) nach Anspruch 9, wobei das zweite Messelement (7) ein auf den Stopfen (BM) geklebtes wärmeempfindliches Klebepflaster ist.

11. Triebwerkssystem (SM) nach Anspruch 10, wobei das zweite Messelement (7) ein ablösbares Klebepflaster ist.

12. Triebwerkssystem (SM) nach einem der Ansprüche 6 bis 8, wobei der Schmierkreis (5) mindestens einen Stopfen (BM) umfasst und das zweite Messelement (7) in dem Stopfen (BM) angebracht ist.

13. Triebwerkssystem (SM) nach einem der Ansprüche 6 bis 8, wobei das zweite Messelement (7) einen Temperatursensor umfasst, der in einer Zirkulationsleitung des Schmierkreises (5) angebracht ist.

14. Flugzeug, das mindestens ein Triebwerkssystem (SM) nach einem der Ansprüche 6 bis 13 umfasst.

## Claims

1. A method for controlling the permeability of a lubrication circuit (5) for an aircraft turbomachine (1), the turbomachine (1) extending along a longitudinal axis (X) oriented from rear to front and comprising successively along the longitudinal axis (X) at least one rear guide bearing (3), a front guide bearing (4), wherein a propulsion shaft (2) is rotatably mounted, and a lubrication box (8) comprising at least one mechanical pump (56) for circulating a flow of oil (H) and a member (TR) for transmitting the pressure and the temperature of the oil, the lubrication circuit (5) being configured to circulate the flow of oil (H) from upstream to downstream between an oil inlet (51) of the lubrication circuit (5) and an oil outlet (52) of the lubrication circuit (5) in order to lubricate each guide bearing (3, 4), the method comprising the steps consisting in:
- Measuring a first temperature (T1) of the oil upstream of one of the guide bearings (3, 4), the first temperature (T1) being measured by means of a first member (6) for measuring the temperature of the flow of oil (H), mounted in the lubrication box (8) in front of the front bearing (4),
- Measuring a second temperature (T2) of the oil downstream of said guide bearing (3, 4),
- Calculating a temperature difference (ΔT) between the second temperature (T2) and the first temperature (T1),
- Comparing the temperature difference (ΔT) with a predetermined expected temperature difference (ΔT0), and
- When the temperature difference (ΔT) is greater than the expected temperature difference (ΔT0), signaling a permeability fault in the lubrication circuit (5).

2. The control method as claimed in claim 1, wherein, with the turbomachine (1) operating at a given regime (R), the expected temperature difference (ΔT0) is predetermined for the given regime (R).

3. The control method according to one of claims 1 to 2, comprising a step of determining a degree of permeability (DP) of the lubrication circuit (5) from a database (BdD) associating a temperature difference (ΔT) and a degree of permeability (DP), the degree of permeability (DP) being determined from the temperature difference (ΔT) obtained.

4. The control method according to one of claims 1 to 3, wherein, a first temperature difference (ΔT1) being calculated at a first instant, a second temperature difference (ΔT2) being calculated at a second instant, subsequent to the first instant, the method comprises a step of comparing the first temperature difference (ΔT1) and the second temperature difference (ΔT2), so as to determine a change in the permeability of the lubrication circuit (5).

5. A product of the computer program type, comprising at least one sequence of instructions stored and readable by a processor and which, once read by this processor, leads the engine system (SM) according to one of claims 6 to 13 to carry out the steps of the method according to one of claims 1 to 4.

6. An engine system (SM) for implementing the method for controlling the permeability of a lubrication circuit (5) according to one of claims 1 to 4, the engine system (SM) comprising:
- an aircraft turbomachine (1) extending along a longitudinal axis (X) and comprising:
o successively along the longitudinal axis (X), at least one rear guide bearing (3), a front guide bearing (4), to be monitored, wherein a propulsion shaft (2) is rotatably mounted, and a lubrication box (8) comprising at least one mechanical pump (56) for circulating a flow of oil (H), and a member (TR) for transmitting the pressure and the temperature of the oil,
o a lubrication circuit (5) for lubricating each guide bearing (3, 4), the lubrication circuit (5) being configured to circulate the flow of oil (H) from upstream to downstream, between an oil inlet (51) of the lubrication circuit (5) and an oil outlet (52) of the lubrication circuit (5),
- a first member (6) for measuring the temperature of the flow of oil (H), the first measuring member (6), mounted upstream of each guide bearing (3, 4) in the lubrication circuit (5), being configured to measure a first temperature (T1) of the oil, the first measuring member (6) being mounted in the lubrication box (8) in front of the front bearing (4),
- a second member (7) for measuring the temperature of the flow of oil (H), the second measuring member (7), mounted downstream of the guide bearing (3, 4) in the lubrication circuit (5), being configured to measure a second temperature (T2) of the oil,
- a calculator (9) configured for:
o Calculating a temperature difference (ΔT) between the second temperature (T2) and the first temperature (T1),
o Comparing the calculated temperature difference (ΔT) with a predetermined expected temperature difference (ΔT0) stored in the calculator (9), and
o When the temperature difference (ΔT) is greater than the expected temperature difference (ΔT0), signaling a permeability fault in the lubrication circuit (5).

7. The engine system (SM) according to claim 6, wherein the calculator (9) is configured to determine a degree of permeability (DP) of the lubrication circuit (5) from a database (BdD) accessible by the calculator (9) and associating a temperature difference (ΔT) and a degree of permeability (DP), the degree of permeability (DP) being determined from the temperature difference (ΔT) obtained.

8. The engine system (SM) according to one of claims 6 to 7, wherein the first measuring member (6) comprises a pressure and temperature transmission member (TR) located in the lubrication circuit (5) upstream of the guide bearing (3, 4) to be monitored.

9. The engine system (SM) according to one of claims 6 to 8, wherein the lubrication circuit (5) comprises at least one plug (BM) and the second measuring member (7) is mounted on said plug (BM).

10. The engine system (SM) according to claim 9, wherein the second measuring member (7) is a heat-sensitive adhesive patch glued to the plug (BM).

11. The engine system (SM) according to claim 10, wherein the second measuring member (7) is a removable adhesive patch.

12. The engine system (SM) according to one of claims 6 to 8, wherein the lubrication circuit (5) comprises at least one plug (BM) and the second measuring member (7) is mounted in said plug (BM).

13. The engine system (SM) according to one of claims 6 to 8, wherein the second measuring member (7) comprises a temperature sensor mounted in a circulation duct of the lubrication circuit (5).

14. An aircraft comprising at least one engine system (SM) according to one of claims 6 to 13.
